Europäisches Patentamt

European Patent Office

Office européen des brevets

(19)

(11) **EP 1 296 226 A2**

(12) **EUROPEAN PATENT APPLICATION**

(43) Date of publication:
26.03.2003 Bulletin 2003/13

(51) Int Cl.⁷: **G06F 9/32**, G06F 9/30

(21) Application number: 02250635.6

(22) Date of filing: 30.01.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.01.2001 GB 0102461**
**12.10.2001 GB 0124562**

(71) Applicant: **Siroyan Limited**
**London W5 3AY (GB)**

(72) Inventors:
• **Topham, Nigel Peter**
**Finchampstead, Wokingham RG40 4PQ (GB)**
• **Livesley, Raymond Malcolm**
**Binfield, Berks RG42 5QZ (GB)**

(74) Representative: **Hitching, Peter Matthew**
**Haseltine Lake & Co.,**
**Imperial House,**
**15-19 Kingsway**
**London WC2B 6UD (GB)**

(54) **Processing program loops in a processor**

(57)     A processor is capable of executing a software-pipelined loop. A plurality of registers (20) store values produced and consumed by executed instructions. A register renaming unit (32) renames the registers during execution of the loop. In the event that a software-pipelined loop requires zero iterations, the registers are renamed in a predetermined way to make the register allocation consistent with that which occurs in the normal case in which the loop has one or more iterations. This is achieved by carrying out an epilogue phase only of the loop with the instructions in the loop schedule turned off so that their results do not commit. The issuance of the instructions in the epilogue phase brings about the predetermined renaming automatically. The number of epilogue iterations may be specified in a loop instruction used to start up the loop.

Fig.6

## Description

The present invention relates to handling of loops in processors.

In high-performance computing, a high rate of instruction execution is usually required of the target machine (e.g. microprocessor). Execution time is often dominated by loop structures within the application program. To permit a high rate of instruction execution a processor may include a plurality of individual execution units, with each individual unit being capable of executing one or more instructions in parallel with the execution of instructions by the other execution units.

Such a plurality of execution units can be used to provide a so-called software pipeline made up of a plurality of individual stages. Each software pipeline stage has no fixed physical correspondence to particular execution units. Rather, when a loop structure in an application program is compiled the machine instructions which make up an individual iteration of the loop are scheduled for execution by the different execution units in accordance with a software pipeline schedule. This schedule is divided up into successive stages and the instructions are scheduled in such a way as to permit a plurality of iterations to be carried out in overlapping manner by the different execution units with a selected loop initiation interval between the initiations of successive iterations. Thus, when a first stage of an iteration i terminates and that iteration enters a second stage, execution of the next iteration i+1 is initiated in a first stage of the iteration i+1. Thus, instructions in the first stage of iteration i+1 are executed in parallel with execution of instructions in the second stage of iteration i.

In such software pipelined loops there are usually loop-variant values, i.e. expressions which must be reevaluated in each different iteration of the loop, that must be communicated between different instructions in the pipeline. To deal with such loop-variant values it is possible to store them in a so-called rotating register file. In this case, each loop-variant value is assigned a logical register number within the rotating register file, and this logical register number does not change from one iteration to the next. Inside the rotating register file each logical register number is mapped to a physical register within the register file and this mapping is rotated each time a new iteration is begun, i.e. each time a pipeline boundary is crossed. Accordingly, corresponding instructions in different iterations can all refer to the same logical register number, making the compiled instructions simple, whilst avoiding a value produced by one iteration from being overwritten by a subsequently-executed instruction of a different iteration.

These matters are described in detail in our co-pending European patent application published under no. EP-A-1124182, the entire content of which is incorporated herein by reference. In particular, that application describes an alternative register renaming scheme in which the mapping is rotated each time a value-producing instruction is issued.

In either renaming scheme a problem arises in that a register location inconsistency can arise in the special case in which a loop body of a software-pipelined loop is not executed at all, as compared to the normal case in which the loop body is executed one or more times. This special case in which the loop body of a software-pipeline loop is not executed at all can arise, for example, when a loop instruction sets up a loop to iterate whilst a loop control variable is changed incrementally from a start value to an end value, but the end value is itself a variable which, at the time the loop instruction is encountered during execution, is less than the start value. This special case results in register locations that are inconsistent with those which follow when the loop body is executed one or more times.

In one embodiment of the present invention a processor is operable to execute a software-pipelined loop. The processor comprises a register unit having a plurality of registers for storing values produced and consumed by executed instructions. The registers are renamed during execution of the loop, for example each time a software-pipeline boundary is crossed or each time a value-producing instruction is issued.

In one embodiment the processor also comprises a loop handling unit which, in the event that a software-pipelined loop requires zero iterations, causes the registers to be renamed in a predetermined way. This predetermined renaming is preferably such that a live-in value is in the same register in the zero-iteration case as it would have been had the loop required one or more iterations so that the live-in value had become a live-out value.

In one embodiment the loop handling unit causes an epilogue phase of the loop to be carried out in the event that the loop requires zero iterations. The epilogue phase is normally entered when all iterations of a non-zero-iteration loop have been initiated (or an exit instruction inside the loop has been executed). This epilogue phase may comprise one or more epilogue iterations.

The number of epilogue iterations (epilogue iteration count or EIC) is dependent on the renaming scheme in operation. For example, in the case in which the registers are renamed each time a software-pipeline boundary is crossed, the EIC may be one less than the number of software pipeline stages. Each epilogue iteration brings about one or more register renaming operations.

Thus, execution of the epilogue phase enables the registers to be renamed automatically so that a live-in value is found after the zero-iteration loop in the same register as it would have been had a non-zero-iteration loop been executed.

In one embodiment the number of register renaming operations in the epilogue phase is specifiable independently of an iteration count (IC) of the loop itself. This enables a compiler to specify the required number of register renaming operations in an object program executed by the processor.

In one embodiment the number of iterations in the epilogue phase (i.e. the EIC) is specifiable independently of the IC. This enables a compiler to specify the required number of epilogue iterations in an object program executed by the processor.

The EIC may be specified in an instruction executable by the processor. In one embodiment this instruction is a loop instruction executed during startup of a software-pipelined loop.

The loop instruction may have a field in which the EIC is specified. This may be separate from a IC field of the loop instruction so that EIC and IC can be independently specified.

In one embodiment the loop handling unit receives an IC for the loop when initiating the loop (e.g. when such a loop instruction is executed) and, if the received IC is zero, it causes only the epilogue phase to be carried out. When the received IC is non-zero it causes prologue and kernel phases of the loop to be carried out in the normal way.

In one embodiment the processor has predicated execution of instructions, for example as described in detail in our co-pending European patent application publication no. EP-A-1164471, the entire content of which is incorporated herein by reference.

In such a processor there may be predicate registers corresponding respectively to the different software pipeline stages of the loop. When the predicate register has a first state (e.g. 1) its corresponding software pipeline stage is enabled, for example the instructions of that stage execute normally and their results are committed. When the predicate register has a second state (e.g. 0) its corresponding software pipeline stage is disabled, for example its instructions may execute but the results thereof are not committed.

In one embodiment the loop handling unit is operable to initiate the predicate registers in dependence upon the received IC.

In one embodiment the loop handling unit is operable to initiate the predicate registers in one way when the IC is zero and in at least one other way when the IC is not zero.

In one embodiment, when the IC is zero, all predicate registers corresponding to the stages of the loop are initialised in the second state, whereas when the IC is non-zero, the predicate register corresponding to the first pipeline state is initialised in the first state and each predicate register corresponding to a subsequent stage is initialised in the second state. This means that the epilogue phase commences immediately in the zero iteration count case, but the prologue and kernel phases are entered first in the normal (non-zero iteration count) case.

In one embodiment the state of the predicate register corresponding to the first pipeline stage is shifted into the predicate register corresponding to the second pipeline stage, and so on. In this way, the pipeline stages may be enabled and disabled in succession as required in the prologue, kernel and epilogue phases.

In one embodiment the state of the predicate register corresponding to the first pipeline stage is set in dependence upon a seed register. In this case the loop handling unit preferably initialises the seed register differently in dependence upon the received IC.

In one embodiment the loop handling unit initialises the seed register in the second state when the received IC is zero or one, and initialises the seed register in the first state when the received IC is two or more.

A second aspect of the present invention relates to a compiling method for a processor.

In one embodiment the compiling method comprises specifying in an object program a register renaming to be carried out by the processor in the event that a software-pipelined loop has a zero iteration count.

In one embodiment the processor carries out the epilogue phase only of the loop in the zero-iteration count case, and the compiling method involves including in the object program information specifying a number of register renaming operations to be carried out in the epilogue phase.

In one embodiment the processor carries out the epilogue phase only of the loop in the zero-iteration count case, and the compiling method involves including in the object program information specifying a number of iterations to be carried out in the epilogue phase.

In one embodiment the information is specified in an instruction included in the object program. In one embodiment this instruction is a loop instruction executed during startup of a software-pipelined loop.

The loop instruction may have a field in which the EIC is specified. This may be separate from a IC field of the loop instruction so that EIC and IC can be independently specified.

A third aspect of the present invention relates to an object program for execution by a processor.

In one embodiment the processor carries out the epilogue phase only of the loop in the zero-iteration count case, and the object program includes information specifying a number of iterations to be carried out in the epilogue phase.

In one embodiment the processor carries out the epilogue phase only of the loop in the zero-iteration count case, and the object program includes information specifying a number of iterations to be carried out in the epilogue phase.

In one embodiment the information is specified in an instruction included in the object program. In one embodiment this instruction is a loop instruction executed during startup of a software-pipelined loop.

The loop instruction may have a field in which the EIC is specified. This may be separate from a IC field of the loop instruction so that EIC and IC can be independently specified.

An object program embodying the invention may be provided by itself or may be carried by a carrier medium. The carrier medium may be a recording medium (e.g. disk or CD-ROM) or a transmission medium such as a signal.

Other aspects of the present invention relate to compiling apparatus for carrying out compiling methods as set out above, and computer programs which, when run on a computer, cause the computer to carry out such compiling methods and/or which, when loaded in a computer, cause the computer to become such compiling apparatus. Compiling methods embodying the present invention are carried out by electronic data processing means such as a general-purpose computer operating according to a computer program.

A computer program embodying the invention may be provided by itself or may be carried by a carrier medium. The carrier medium may be a recording medium (e.g. disk or CD-ROM) or a transmission medium such as a signal.

Reference will now be made, by way of example, to the accompanying drawings, in which:

Fig. 1 shows parts of a processor embodying the present invention;
Fig. 2 presents a table for use in explaining software-pipelined execution of instructions by the Fig. 1 processor;
Fig. 3 presents a table for use in explaining different phases of execution of a software-pipelined loop;
Fig. 4 shows an example of high-level instructions involving a loop;
Fig. 5 is a schematic representation of registers used in executing the Fig. 4 loop;
Fig. 6 shows parts of the Fig. 1 processor in one embodiment of the present invention;
Fig. 7 is a schematic diagram for use in explaining execution of a software-pipelined loop in the Fig. 1 processor;
Fig. 8 shows an example of the format of a loop instruction in a preferred embodiment;
Fig. 9 shows parts of a loop handling unit in one embodiment;
Figs. 10(a) to 10(c) are schematic diagrams for use in explaining one example of a software-pipelined loop;
Fig. 11 is a schematic diagram for use in explaining how predicate registers are used to control execution of a software-pipelined loop in a preferred embodiment of the present invention;
Fig. 12 shows parts of predicate register circuitry in a preferred embodiment of the present invention; and
Figs. 13(a) to 13(d) are schematic views for use in explaining how the predicate registers are initialised for different iteration count values.

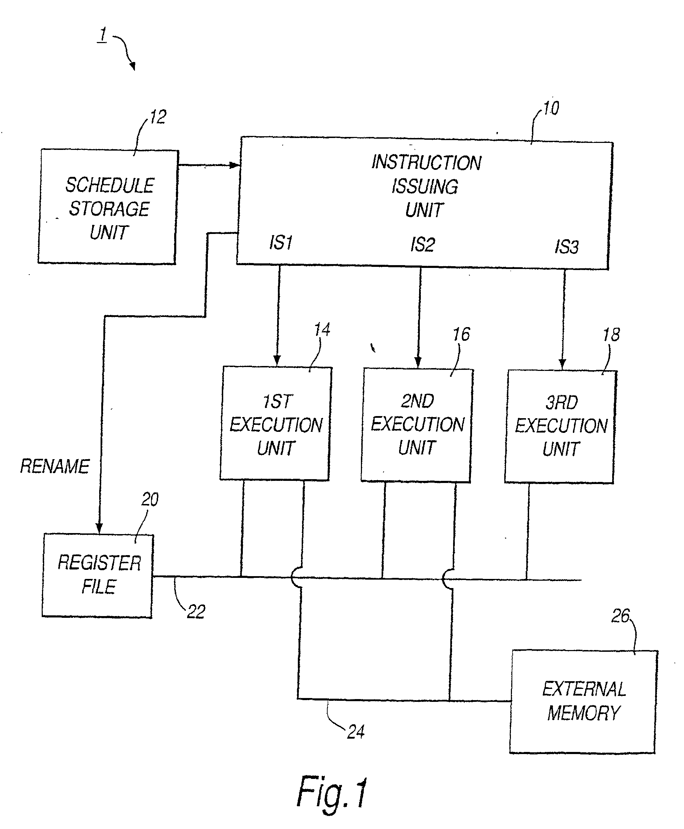

Fig. 1 shows parts of a processor embodying the present invention. In this example, the processor is a very long instruction word (VLIW) processor with hardware support for software pipelining and cyclic register renaming. The processor 1 includes an instruction issuing unit 10, a schedule storage unit 12, respective first, second and third execution units 14, 16 and 18, and a register file 20. The instruction issuing unit 10 has three issues slots IS1, IS2 and IS3 connected respectively to the first, second and third execution units 14, 16 and 18. A first bus 22 connects all three execution units 14, 16 and 18 to the register file 20. A second bus 24 connects the first and second units 14 and 16 (but not the third execution unit 18 in this embodiment) to a memory 26 which, in this example, is an external random access memory (RAM) device. The memory 26 could alternatively be a RAM internal to the processor 1.

Incidentally, although Fig. 1 shows shared buses 22 and 24 connecting the execution units to the register file 20 and memory 26, it will be appreciated that alternatively each execution unit could have its own independent connection to the register file and memory.

The processor 1 performs a series of processing cycles. In each processing cycle the instruction issuing unit 10 can issue one instruction at each of the issue slots IS1 to IS3. The instructions are issued according to a software pipeline schedule (described below) stored in the schedule storage unit 12.

The instructions issued by the instructing issuing unit 10 at the different issue slots are executed by the corresponding execution units 14, 16 and 18. In this embodiment each of the execution units can execute more than one instruction at the same time, so that execution of a new instruction can be initiated prior to completion of execution of a previous instruction issued to the execution unit concerned.

To execute instructions, each execution unit 14, 16 and 18 has access to the register file 20 via the first bus 22. Values held in registers contained in the register file 20 can therefore be read and written by the execution units 14, 16 and 18. Also, the first and second execution units 14 and 16 have access via the second bus 24 to the external memory 26 so as to enable values stored in memory locations of the external memory 26 to be read and written as well. The third execution unit 18 does not have access to the external memory 26 and so can only manipulate values contained in the register file 20 in this embodiment.

The Fig. 1 processor is capable of software pipelining, a technique that seeks to overlap instructions from distinct loop iterations in order to reduce the total execution time for the loop. Each iteration is partitioned into pipeline stages with zero or more instructions in each pipeline stage.

The example below is a conceptual view of a single pipelined iteration of a loop in which each pipeline stage is one cycle long:

    stage 1: ld4 r4 = [r5]

stage 2: --// empty stage
stage 3: add r7 = r4, r9
stage 4: st4 [r6] = r7

Here, the instruction in stage 1 is a load instruction which loads into logical register number 4 a four-byte value contained in the memory address pointed to by logical register number 5.

There is no instruction in pipeline stage 2 (empty stage). The instruction in pipeline stage 3 is an add instruction which adds together the contents of logical register numbers 4 and 9 and stores the result in logical register number 7. The instruction in stage 4 is a store instruction which stores the content of logical register number 7 at a memory location pointed to by logical register number 6.

During software-pipelined execution of the loop, a new iteration is initiated after a predetermined number of cycles. The number of cycles between the start of successive iterations is called the initiation interval (II). Modulo scheduling is a particular form of software-pipelining in which the iteration interval II is a constant and every iteration of the loop has the same schedule. In the present example it will be assumed that the II is one cycle.

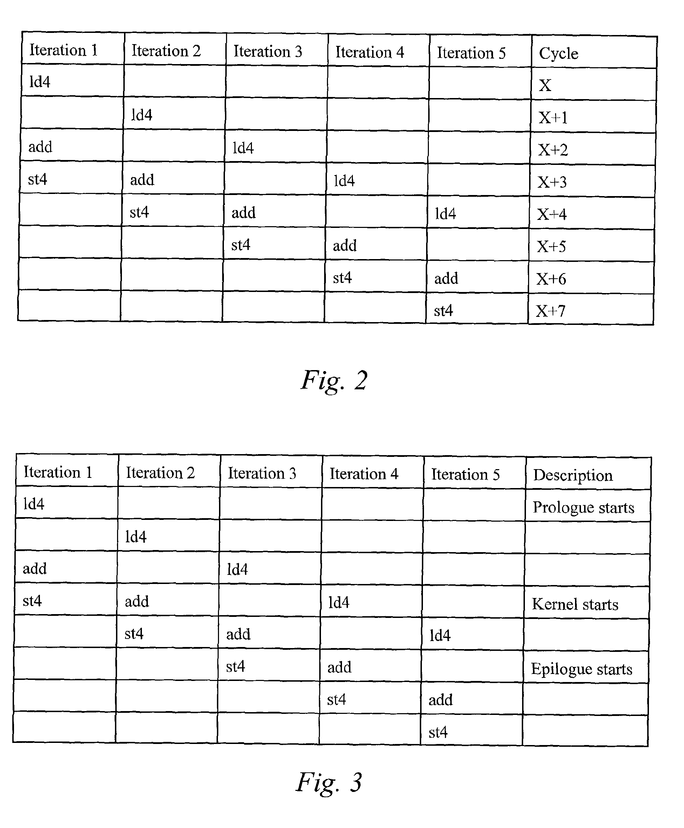

It will also be assumed in the present example that the loop requires five iterations in total. These five iterations are shown conceptually in Fig. 2. It can be seen that each stage of a pipeline iteration is II cycles long. It can also be seen that 8 cycles X to X+7 are required from the issuance of the first ld4 instruction in iteration 1 to the issue of the final st4 instruction in iteration 5. In these eight cycles, 15 instructions are issued in total.

Software-pipelined loops have three phases: a prologue phase, a kernel phase and an epilogue phase. The start of each of these phases in the present example is illustrated in Fig. 3.

During the prologue phase a new loop iteration is started every II cycles to fill the pipeline. During the first cycle of the prologue phase, stage 1 of iteration 1 executes. During the second cycle, stage 1 of iteration 2 and stage 2 of iteration 1 execute, and so on.

By the start of the kernel phase (the start of iteration p, where p is the number of pipeline stages) the pipeline is full. Stage 1 of iteration 4, stage 2 of iteration 3, stage 3 of iteration 2 and stage 4 of iteration 1 execute.

During the kernel phase a new loop iteration is started, and another is completed, every II cycles.

Eventually, at the start of the epilogue phase there are no new loop iterations to initiate, and the iterations already in progress continue to complete, draining the pipeline. In the present example, the epilogue phase starts at cycle X+5 because there is no new loop iteration to start and iteration 3 is coming to an end. Thus, in this example, iterations 3 to 5 are completed during the epilogue phase.

In the present example, the load instruction in iteration 2 is issued before the result of the load instruction in iteration 1 has been consumed (by the add instruction in iteration 1). It follows that the loads belonging to successive iterations of the loop must target different registers to avoid overwriting existing live values.

Modulo scheduling allows a compiler to arrange for loop iterations to be executed in parallel rather than sequentially. However, the overlapping execution of multiple iterations conventionally requires unrolling of the loop and software renaming of registers. This generates code duplication and involves complicated schemes to handle live input and output values. To avoid the need for unrolling, it is possible to arrange for registers used to store values during iterations of the loop to be renamed as the iterations progress so as to provide every iteration with its own set of registers. One example of this register renaming is called register rotation. In this technique, a mapping between logical register numbers and physical register addresses is changed in rotating manner. The event triggering rotation of the mapping may be the crossing of a software-pipeline boundary, i.e. crossing from one pipeline stage to the next, or issuance of a value-producing instruction. These matters are described in detail in our co-pending European patent application publication no. EP-A-1124182, the entire content of which is incorporated herein by reference. Through the use of register renaming, software pipelining can be applied to a much wider variety of loops, both small as well as large, with significantly reduced overhead.

Because the events which will trigger register renaming at execution time are known in advance by the compiler, the compiler can specify suitable logical register numbers in instructions requiring access to registers used to hold values used iterations of the loop. For example, if the register renaming scheme causes registers to be renamed each time a software-pipeline boundary is crossed, then it is known that a value placed in register a by an instruction in stage n of a loop schedule will be accessible from register a+1 by an instruction in the stage n+1 (this assumes that the logical register numbers rotate from lower-numbered registers to higher-numbered registers).

In practice, the task of the compiler is complicated by the dependency relationships between instructions belonging to different iterations of the loop and between instructions within the loop and those outside the loop. Values defined before the loop which are used within the body of the loop are referred to as "live-in values". Values defined within the loop body and used after the loop are referred to as "live-out values". Similarly, a "recurrence value" or "recurrence-definition value" is a value defined in one iteration of the loop and used in a subsequent iteration of the loop. Normally, such a recurrence value is also a live-in value to the loop body because prior to the start of the loop it needs to be assigned a value for the first iteration. A "redefinition value" is a redefinition of a value that was previously defined prior to the loop.

Despite these complications, it is expected that it should be possible for the compiler to take each instance of a live-in value, live-out value, recurrence value or redefinition value and evaluate the register to be used as an input of the loop, the registers used in each stage of the loop, and the register in which the value will emerge from the loop.

However, in practice it is found that, in the special case in which the iteration count is zero, the loop would normally be bypassed completely and the registers would not rotate. This means that any live-in value which becomes a live-out value is likely to be in a different register in this special case from the register in which the live-out value emerges from the loop in the normal case in which the iteration count is non-zero.

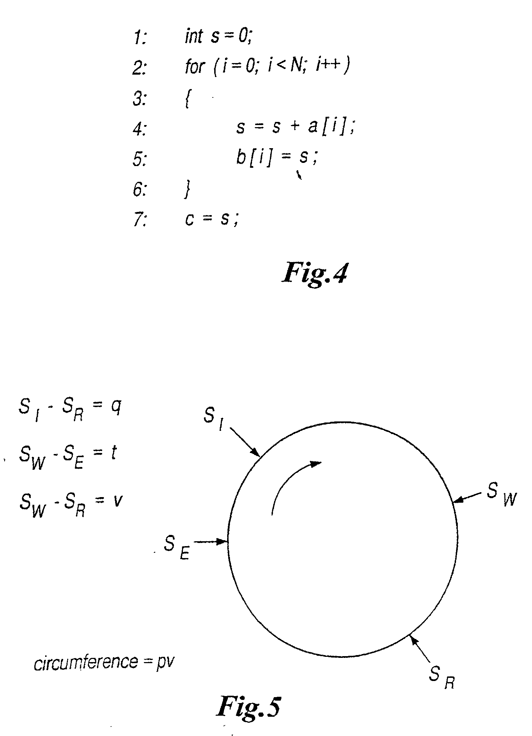

This special case in which the loop body of a software-pipeline loop is not executed at all can arise, for example, when a loop instruction sets up a loop to iterate whilst a loop control variable is changed incrementally from a start value to an end value, but the end value is itself a variable which, at the time the loop instruction is encountered during execution, is less than the start value. The way in which this special case results in register locations that are inconsistent with those which follow when the loop body is executed one or more times, will now be explained with reference to Figs. 4 and 5.

Consider an example in which issuance of value-producing instructions causes renaming to occur. A software-pipelined loop schedule has v value-producing instructions and p software pipeline stages. If the loop iterates n times then the register file would be rotated v (n+p-1) times during execution of the loop. The compiler uses this information to predict the locations in the register file of values produced inside the loop and then subsequently used outside the loop. Normally it is the values produced by the final iteration of the loop that are subsequently required outside the loop. Each such value produced by the final iteration in fact has a location that is independent of the loop iteration count n and is invariant upon exit from the loop provided that the loop iteration count n is greater than 0. The final iteration of the loop requires that the loop schedule be issued p times. Hence, between the start of the final iteration and the final exit from the loop there will be pv rotations of the loop. If any value is live on entry to the loop and live on exit from the loop, then there must be at least pv rotating registers.

One example of a loop is shown in Fig. 4. In this example, a scalar variable s is initialised (line 1) prior to the entry into the loop, has a recurrence within the loop body (line 4) and is also used after the loop has completed (line 7). Its lifetime therefore spans the entire loop.

As described previously, the compiler will arrange that in each iteration the code at line 4 will read the value of s produced in the previous iteration from logical register number $S_R$ and write the new value s produced in the current iteration in logical register number $S_W$. These register numbers are chosen such that after rotating the register file v times the value written to register $S_W$ in the previous iteration is now available in register $S_R$ in the current iteration.

The initial value of s, which is defined at line 1 in Fig. 4, must be written to an appropriate register $S_1$ and $S_1$ must be chosen such that when the first iteration reads from $S_R$ in line 4 the value written to $S_1$ in line 1 has rotated such that it is now accessible in register $S_R$. The precise number of rotations between line 1 and line 4 in the first iteration depends on the software pipeline stage in which line 4 occurs and on the position of the instruction which uses s within the loop schedule. Let the number of rotations required to move the value in $S_1$ to $S_R$ be q.

The last write of s into logical register number $S_W$ occurs in line 4 of the final iteration of the loop. This last-written value is read from logical register number $S_E$ after exit from the loop in line 7. Let the number of rotations required to move the value in $S_W$ to $S_E$ be t.

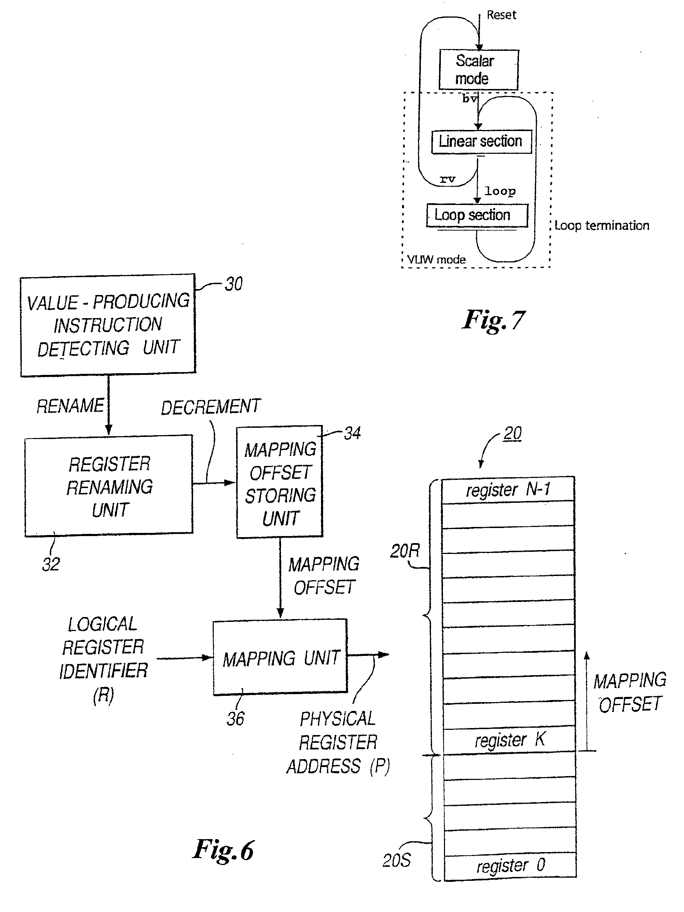

The relationship between these registers $S_1$, $S_W$, $S_R$ and $S_E$ is represented schematically in Fig. 5. In Fig. 5, the circle represents the rotating region of the register file (i.e. the number of renameable registers - see Fig. 6 below). The size of the rotating region (i.e. the circumference in Fig. 5) is assumed to be pv registers, which is the number of registers needed when there is at least one live-in value that is also live-out. The individual registers in the rotating region are spaced apart at equal intervals around the circumference.

It is assumed that the read of s (in line 4) occurs in software pipeline stage k, where $0 \leq k \leq p-1$. It is also assumed that the read of s (in line 4) occurs when w rotations have occurred during the schedule, where $0 \leq w \leq v-1$. Hence, q=kv+w and t=v(p-k-1)+v-w. From this it follows that the number of rotations from the initial definition of s in line 1 to the position at which a post-exit value-requiring instruction using s can expect to find it is given by q+t-v, which is simply v(p-1).

Accordingly, given an initial logical register $S_1$ at which s is written before the loop is executed, the compiler knows that after the loop has completed the last-written value of s will be found in logical register number $S_1$+v(p-1). However, this does not apply in the special case in which the loop body is not executed at all, as could occur if the loop control variable N in line 2 of Fig. 4 is found to be 0 or negative at execution time. In this special case, the value of s needed in line 7 would be simply found in $S_1$ rather than in register $S_1$+v(p-1) as in all other cases. This inconsistency is inconvenient in that the compiler would need to supplement the compiled code with special instructions to deal with the possibility that N could be zero or negative at execution time. It is desirable to avoid the compiler having to take special measures of this kind.

Accordingly, in this example (in which the register renaming method involves renaming each time a value-producing instruction is issued), a processor in accordance with the present invention is arranged that, if the loop iteration count is found to be zero at execution time, and hence the loop body is not to be executed at all, then the register file is rotated v(p-1) times before the processor continues past the end of the loop. This has the effect of skipping v(p-1) sequence numbers before issuance of a first instruction after exit from the loop. This can conveniently be achieved by issuing the instructions of the loop schedule p-1 times without actually performing the instructions. The act of issuing each value-producing instruction will rotate the register file, so each complete issue of the loop schedule will rotate the register file v times. In this way, when the loop iteration count is zero, the initial value of s is made available in logical register $S_1+v(p-1)$, as desired.

As will be described in detail hereinafter, issuance of the instructions p-1 times can be achieved by effectively going straight into a shut-down mode of the software-pipelined loop, and setting an additional (global) predicate false to prevent any of the instructions being executed.

The invention is also applicable when other register renaming methods are used, for example the technique method in which the processor renames the renameable registers each time a software-pipeline boundary is crossed. In this case, the processor may be arranged to rotate the registers by p-1 registers in the event of a zero iteration count.

In this case also, the processor skips one or more renameable registers in the event of a zero iteration count but the number of skipped registers is independent of the number of value-producing instructions, and dependent on the number of software-pipeline stages. Preferably the number of skipped registers is p-1.

Incidentally, it will be understood that, for the sequence offsets to be calculated correctly in the register renaming method based on value-producing instructions, instructions that are turned off due to predicated execution (see later) must still advance the numbering of values. However, this never increases the number of registers needed to store intermediate values within a loop.

The technique described above operates correctly in conjunction with software pipelining provided that recurrence values (any loop-variant value that is computed as a function of itself in any previous iteration) are initialised outside the loop in the correct order.

Preferred embodiments of the present invention will now be described in more detail.

Fig. 6 shows in more detail the register file 20 in the Fig. 1 processor and associated circuitry.

In Fig. 6 the register file 20 has N registers in total, of which the lower-numbered K registers make up a statically-addressed region 20S and the higher-numbered N-K registers make up a dynamically-addressed (renameable or rotating) region 20R. The registers of the statically-addressed region 20S are used for storing loop-invariant values, whilst the registers of the renameable region 20R are used for storing loop-variant values. The boundary between the two regions may be programmable.

As shown in Fig. 1 the instruction issuing unit 10 supplies a RENAME signal to the register file circuitry.

If the register renaming method in use is to rename each time a value-producing instruction is issued, a value-producing instruction detecting unit 30 is provided which detects when a value-producing instruction is issued. The value-producing instruction detecting unit 30 is conveniently included in the instruction issuing unit 10 of Fig. 1. Upon detecting the issuance of such an instruction, the value-producing instruction detecting unit 30 produces a RENAME signal.

If the register renaming method in use is to rename each time execution of a new iteration is commenced, i.e. every II processor cycles, the instruction issuing unit 10 produces a RENAME signal every II processor cycles.

The RENAME signal is applied to a register renaming unit 32. The register renaming unit 32 is connected to a mapping offset storing unit 34 which stores a mapping offset value OFFSET. In response to the RENAME signal the register renaming unit 32 decrements by one the mapping offset value OFFSET stored in the mapping offset storing unit 34.

The mapping offset value OFFSET stored in the mapping offset storing unit 34 is applied to a mapping unit 36. The mapping unit 36 also receives a logical register identifier (R) and outputs a physical register address (P). The logical register identifier (number) is an integer in the range from 0 to N-1. The mapping unit 36 implements a bijective mapping from logical register identifiers to physical register addresses. Each physical register address is also an integer in the range 0 to N-1 and identifies directly one of the actual hardware registers.

If an instruction specifies a logical register number R as one of its operands, and R is in the range 0 to K-1 inclusive, then the physical register number is identical to the logical register number of that operand. However, if R is in the range K to N-1 then the physical register address of that operand is given by P such that:

$$P = K + |R - K + OFFSET|_{N-K}$$

In this notation, $|y|_x$ means y modulo x.

Thus, changing the mapping offset value OFFSET has the effect of changing the mapping between the logical register identifiers specified in the instructions and the actual physical registers in the part 20R of the register file 20. This results in renaming the registers.

The Fig. 1 processor is operable in two different modes: a scalar mode and a VLIW mode. In the scalar mode a single instruction is issued per processor cycle for execution by a single one of the execution units 14, 16 and 18. That single execution unit (e.g. the unit 14) may be referred to as a "master" execution unit. In VLIW mode a single VLIW instruction packet is issued per processor cycle, that instruction packet containing a plurality of instructions to be issued in the same cycle by the instruction issuing unit 10. These instructions are issued in parallel from different issue slots (IS1 to IS3 in Fig. 1) for execution by two or more of the execution units operating in parallel.

Fig. 7 shows schematically the possible transitions between scalar and VLIW modes, as well as different types of VLIW code section. As shown in Fig. 5, transition from scalar mode to VLIW mode is brought about by execution by the master execution unit of a branch-to-VLIW (bv) instruction. Transition from VLIW mode to scalar mode is brought about by execution by any one of the execution units of a return-from-VLIW (rv) instruction.

The code within a VLIW schedule consists logically of two different types of code section: linear sections and loop sections. Each section comprises one or more VLIW packets. On entry to each VLIW schedule, the processor begins executing a linear section. This may initiate a subsequent loop section by executing a loop instruction.

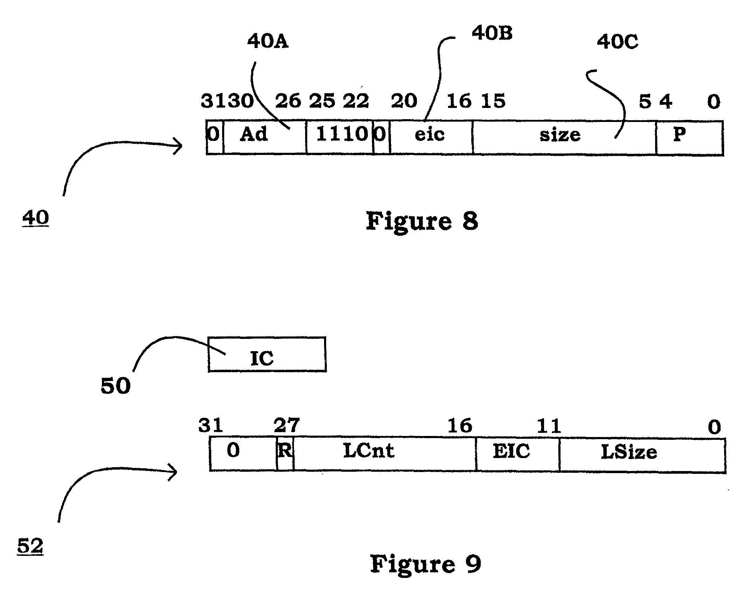

Fig. 8 shows the format of the loop instruction in a preferred embodiment of the present invention. As shown in Fig. 8, the loop instruction 40 has various fields including an iteration count field 40A, an epilogue iteration count field 40B and a size field 40C. An 11-bit value size specified in the size field 40C defines the length of the loop section. A 5-bit operand Ad specified by the iteration count field 40A identifies an address register which contains an iteration count (IC). The IC is the number of iterations in the loop.

A 5-bit value eic specified by the field 40B is an epilogue iteration count (EIC). The EIC is the number of iterations in the epilogue phase of the loop, i.e. the number of iterations which are completed during the epilogue phase. In the example described above with reference to Figs. 2 and 3, IC=5 and EIC=3. It will be seen from Fig. 6 that the loop instruction 40 has separate fields 40A and 40B for specifying the IC and EIC respectively, so that these parameters can be set independently of one another. Typically, EIC = p-1, where p is the number of pipeline stages. As described hereafter in more detail, the values held in the fields 40A to 40C of the loop instruction are used during loop start-up to initialise various loop control registers of the processor.

The loop instruction may be written as:

> loop P, Ad, size, eic

Loop sections iterate automatically, terminating when the number of loop iterations reaches the IC specified by the loop instruction. It is also possible to force an early exit from a loop section prior to the IC being reached by executing an exit instruction. When the loop section terminates, a subsequent linear section is always entered. This may initiate a further loop section, or terminate the VLIW schedule by executing a rv instruction. Upon termination of the VLIW schedule, the processor switches back into scalar mode. Incidentally, as shown in Fig. 7, the processor initially enters scalar mode on reset.

The processor 1 has various control registers for controlling loop startup and execution. Among these registers, an iteration count register (IC register) 50 and a loop context register 52 are shown in Fig. 9. Further information regarding these and other loop control registers is disclosed in our co-pending European patent application publication no. EP-A-1158401, the entire content of which is incorporated herein by reference.

During loop startup the iteration count IC defined by the address register operand Ad of the field 40A of the loop instruction is copied to the IC register 50. The IC value indicates the maximum number of iterations that will be initiated prior to the loop epilogue phase, provided that no exit instruction terminates the loop kernel phase prematurely.

The loop context register 52 has a rotation control field 52A, a loop count field 52B, an EIC field 52C and a loop size field 52D. The values EIC and LSize in fields 52C and 52D are initialised during loop startup with the values eic and size specified by the fields 40B and 40C of the loop instruction. The loop count field specifies a value LCnt defining the number of VLIW packets still to be executed before the end of the current loop iteration is reached. This is initialised to the same value as LSize and is decremented each time a packet is issued within a loop. It is reloaded from LSize when each new iteration is begun.

During the epilogue phase, the EIC value in field 52C is decremented each time a new epilogue iteration is begun.

The rotation control field 52A holds a single bit R which is set automatically by loop control circuitry to indicate whether register rotation should be enabled or disabled for the current iteration. This bit is used solely to record the register rotation status across a context switch boundary, i.e. for the purpose of saving and restoring processor state.

Once the registers 50 and 52 and other loop control registers have been initialised by the execution of the loop instruction, the processor enters VLIW loop mode. In this mode it executes the loop section code repeatedly, checking that the loop continuation condition still holds true prior to beginning each new iteration.

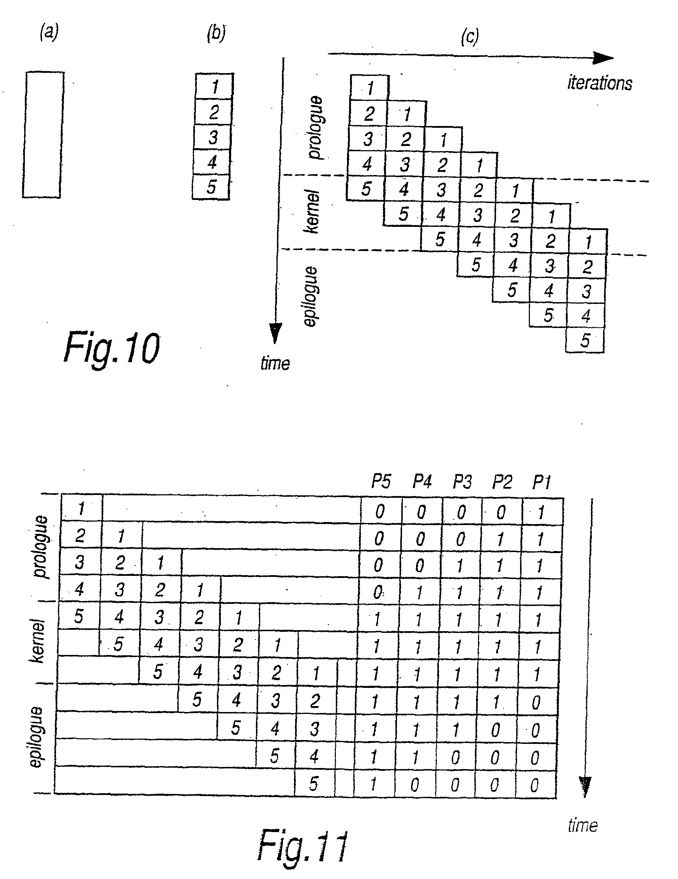

During loop execution, predicate registers are used to control the execution of instruction. The way in which this control is carried out will now be described with reference to Figs. 10(a) to 10(c), 11 and 12.

Fig. 10(a) shows a loop prior to scheduling. Fig. 10(b) shows the loop after scheduling into five pipeline stages (stages 1 to 5). Fig. 10(c) shows a space-time graph of seven overlapping iterations of the pipelined loop schedule of Fig. 10(b). Fig. 10(c) also shows the prologue, kernel and epilogue phases of the execution.

During the prologue phase of the loop the instructions in each pipeline stage need to be enabled in a systematic way. Similarly, during the epilogue phase the instructions in each pipeline stage need to be disabled systematically. This enabling and disabling can advantageously be achieved using predication.

Referring now to Fig. 11 the overlapped iterations (each consisting of five stages) correspond to those illustrated in Fig. 10. Also illustrated in Fig. 11 is a set of five predicate registers P1 to P5. These predicate registers P1 to P5 correspond respectively to pipeline stages 1 to 5 within the pipelined loop schedule and the respective states stored in the predicate registers can change from one stage to the next during loop execution. These predicate registers are associated with each execution unit 14, 16, 18 of the processor 1.

Each instruction in the software-pipelined schedule is tagged with a predicate number, which is an identifier to one of the predicate registers P1 to P5. In the example of Fig. 11, the instruction(s) in stages 1 to 5 of the pipeline schedule would be tagged with the predicate register identifiers P1 to P5 respectively.

When an instruction is issued by the instruction issuing unit 10, it is first determined whether the state of the predicate register corresponding to that instruction (as identified by the instruction's tag) is true or false. If the state of the corresponding predicate register is false then the instruction is converted automatically into a NOP instruction. If the corresponding predicate-register state is true, then the instruction is executed as normal.

Therefore, with this scheme all instructions in pipeline stage i are tagged with predicate identifier Pi. For the scheme to operate correctly, it must be arranged, during loop execution, that the state of the predicate register Pi must be true whenever pipeline stage i should be enabled, for all relevant values of i. This provides a mechanism for enabling and disabling stages to control the execution of the loop.

Fig. 11 shows how the predicate-register states for each software pipeline stage change during the execution of the loop. Prior to the start of the loop, each of the predicate registers P1 to P5 is loaded with the state 0 (false state). Prior to initiation of the first iteration, the state 1 (true state) is loaded into the first predicate register P1, thus enabling all instructions contained within the first stage of each of the iterations. All other predicate registers P2 to P5 retain the state 0, so that none of the instructions contained within the second to fifth pipeline stages are executed during the first II cycles.

Prior to the initiation of the second iteration, the state 1 is also loaded into the second predicate register P2, thus enabling all instructions contained within the second stage of the loop schedule. Predicate register P1 still has the state 1, so that instructions contained within the first stage are also executed during the second II cycles. Predicate registers P3 to P5 remain at the state 0, since none of the instructions contained within the third to fifth pipeline stages are yet required.

During the prologue phase, each successive predicate register is changed in turn to the state 1, enabling each pipeline stage in a systematic way until all five predicate registers hold the state 1 and all stages are enabled. This marks the start of the kernel phase, where instructions from all pipeline stages are being executed in different iterations. All the predicate registers have the state 1 during the entirety of the kernel phase.

During the epilogue stage, the pipeline stages must be disabled in a systematic way, starting with stage 1 and ending with stage 5. Therefore, prior to each pipeline stage boundary, the state 0 is successively loaded in turn into each of the predicate registers P1 to P5, starting with P1. The pipeline stages are therefore disabled in a systematic way, thus ensuring correct shut down of the loop.

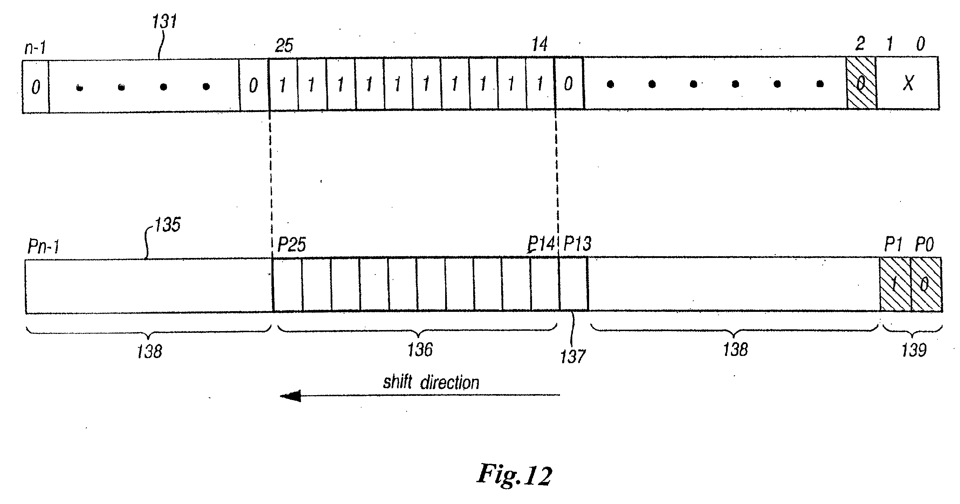

A dynamic pattern is clearly visible from the predicate registers shown in Fig. 11. In our copending European patent application publication no. EP-A-1164471 this pattern is exploited by predicate file circuitry as shown in Fig. 12. The entire content of EP-A-1164471 is incorporated herein by reference.

In Fig. 12, a predicate register file 135 has n predicate registers P0 to Pn-1. The predicate registers P0 and P1 are preset permanently to 0 and 1 respectively. The predicate registers P3 to Pn-1 are available for use as predicate registers for loop control purposes. The register P2 is reserved for reasons explained below. An n-bit register 131 (referred to hereinafter as a "loop mask" register) is used for identifying a subset 136 of the n-3 predicate registers P3 to Pn-1 that are actually used as predicate registers for loop control purposes. The loop mask register 131 holds n bits which correspond respectively to the n predicate registers in the predicate register file 135.

If the predicate register Pi is to be included in the subset 136, then the corresponding bit i in the loop mask register 131 is set to the value "1". Conversely, if the predicate register Pi is not to be included in the subset 136 then the corresponding bit i in the loop mask register 131 is set to the value "0". Typically the loop mask register 131 will contain a single consecutive sequence of ones starting at any position from bit 3 onwards, and of maximum length n-3.

In this example, bits 14 to 25 of the loop mask register 131 are set to 1, and all other bits are set to 0, so the subset 136 comprises registers P14 to P25 in this case.

A predicate register identifier is attached to each instruction in a loop section to identify directly one of the predicate registers within the subset 136 predicate register file 135. If, for example, there are 32 predicate registers, the predicate register identifier can take the form of a 5-bit field contained within the instruction.

The identifiers for all instructions within a particular pipeline stage may be the same so that all of them are either enabled or disabled according to the corresponding predicate-register value. There can, however, be more than one predicate register associated with a particular stage (for example with if/then/else or comparison instructions).

Prior to the initiation of each successive loop iteration, a shift operation is performed in which content of each predicate register of the subset 136 is set to the content of the predicate register to its immediate right. The predicate register to the immediate right of the shifting subset (P13 in Fig. 12) is a seed register 137. Thus, in each shift operation the content of the first predicate register (P14) of the shifting register subset 136 is set to the content of the seed register ("the seed").

For example, referring to Fig. 11, during the prologue and kernel phases of loop execution, the seed register 137 is preset to the state "1" whilst, during the epilogue stage, the seed register 137 is preset to the state "0" in order to perform loop shut down. When shifting occurs, the seed is copied into the right-most register (P14) but the seed itself remains unaltered.

During the loop set-up process, the content of the loop mask register 131 is used to initialise the shifting subset 136 of predicate registers and the seed register 137. As described below their initial values depend on the iteration count as well as the actual bit pattern in the loop mask register 131.

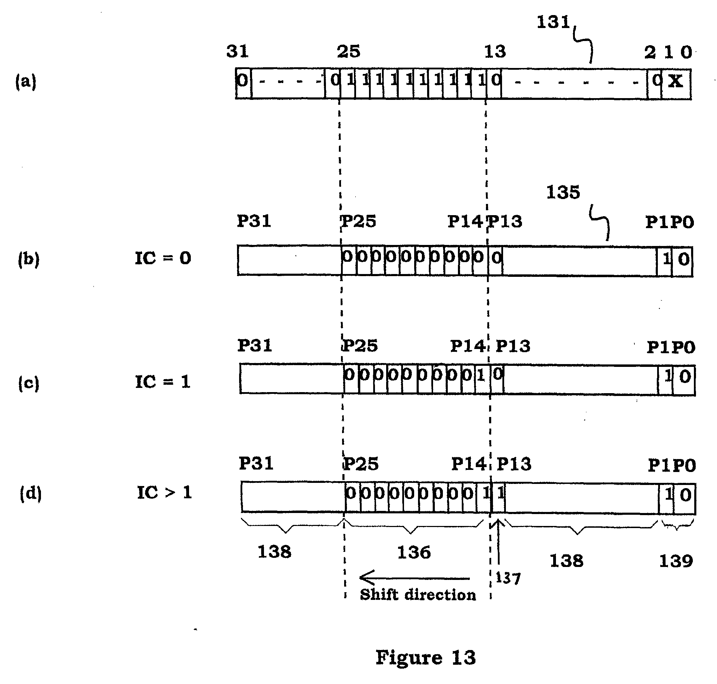

Referring now to Figs. 13(a) to 13(d), Fig. 13 (a) shows again the loop mask register 131 in the Fig. 12 example. Fig. 13(b) shows that, in the case in which the iteration count specified by a loop instruction is zero, the seed register 137 and all the predicate registers within the shifting subset 136 are cleared.

As shown in Fig. 13(c), if the iteration count specified by a loop instruction is 1, the seed register 137 is cleared and all predicate registers within the shifting subset 136 except the one immediately to the left of the seed register 137 are cleared. The predicate register immediately to the left of the seed register 137 is set to 1.

As shown in Fig. 13(d), if the iteration count specified by a loop instruction is greater than 1, then the seed register 137 and the predicate register immediately to its left in the shifting subset 136 are both set to 1. All other predicate registers within the shifting subset are set to zero.

Thus, the loop set-up process for any loop with one or more iterations will assign the values 00...01 to the shifting subset 136 of the predicate register file 135.

During execution of the loop, at the end of each iteration the shifting subset 136 is shifted one place to the left, and the seed register is copied in at the right-hand end of the shifting subset 136. Also at the end of each iteration the IC register 50 is decremented by 1.

When the IC register 50 reaches zero the seed register 137 is cleared, and the loop epilogue phase begins. The number of iterations in the epilogue phase is determined by the EIC contained in the loop context register 52, this having been set by the loop instruction as part of the loop set-up process.

At any time, the loop itself can initiate early shutdown by executing an exit instruction. When an exit instruction is executed and its associated predicate register is set to 1, the processor enters the loop epilogue phase by clearing the IC register 50 and clearing the seed register upon completion of the current iteration. However, if the exit instruction appears in loop pipeline stage i, then all irrevocable state-changing operations must appear in the loop schedule at pipeline stage i or beyond, and if they are in stage i then they must be issued before the exit instruction.

When the processor is in the epilogue phase, instructions are issued as normal. At the end of each iteration the subset 136 of predicate registers is shifted and the EIC value in the loop context register 52 is decremented. The processor exits the loop mode when it reaches the end of a loop iteration and both the IC register 50 and the EIC value in the loop context register 52 are zero.

If the register renaming method in use is renaming each time a pipeline boundary is crossed, then the number of renaming operations (rotations) performed by the loop will always be IC+EIC. If the register renaming method in use is to rename each time a value-producing instruction is issued, then the number of renaming operations (rotations) performed by the loop will always be (IC+EIC) v, where v is the number of value-producing instructions in the loop schedule.

An example of logic circuitry for performing operations on the predicate register file 135 during loop sequencing is described in our co-pending European application publication no. EP-A-1164471. In that application the initialisation operation was represented by the pseudo-code:

$$\text{For all } i \text{ from 2 to } n-1:$$
$$P_i' = \bar{L}_i \text{ AND } (P_i \text{ OR } L_{i+1})$$

In an embodiment of the present invention, the initialisation operation is modified to take account of the iteration count (for example as specified in the loop instruction) so that the seed register 137 and the first register of the subset 136 are set in dependence upon IC as well as on the content of the loop mask register 131. The modified pseudo-code is as follows:

$$\text{For all } i \text{ from 3 to } n-1$$
$$\text{if } L_i = 1 \text{ and } L_{i-1} = 0$$
$$P_i = (IC \neq 0)$$
$$P_{i-1} = (IC > 1)$$

else
    if $L_i = 1$ and $L_{i-1} = 1$
      $Pi = 0$

As described in EP-A-1164471, circuitry for performing this initialisation operation and any other operations required on the predicate register file during processor execution can be implemented using standard logic design techniques to yield a finite state machine for use as part of an operating unit associated with each predicate register. The inputs to the computation of the next state for $P_i$ will include IC in this case, in addition to the various selection signals and loop-mask register bits described in EP-A-1164471.

As described above, a processor embodying the present invention is arranged that, if the loop iteration count is found to be zero at execution time, and hence the loop body is not to be executed at all, then the register file is rotated a certain number of times before the processor continues past the end of the loop. This has the effect of skipping a predetermined number of renameable registers before issuance of a first instruction after exit from the loop. This can conveniently be achieved by issuing the instructions of the loop schedule p-1 times without actually performing the instructions.

Issuance of the instructions p-1 times can be achieved by effectively going straight into a shut-down mode of the software-pipelined loop, and setting an additional (global) predicate false to prevent any of the instructions being executed.

As described above, an embodiment of the present invention has the advantage that the register allocation in both the normal and the exceptional (zero iteration) cases is the same, avoiding the need for the compiler to provide additional code to deal with the exceptional case. This reduces the overall code size. It also removes the need to check for the exceptional case and avoids the processing overhead that this would introduce. Finally, the code to be generated by the compiler or programmer is simplified.

**Claims**

1. A processor, operable to execute a software-pipelined loop, comprising:

    a plurality of registers (20) for storing values produced and consumed by executed instructions;
    register renaming means (32) for renaming the registers during execution of the loop; and
    loop handling means (10, 50, 52) operable, in the event that a software-pipelined loop requires zero iterations, to cause the registers to be renamed in a predetermined way.

2. A processor as claimed in claim 1, wherein the loop handling means cause the registers to be renamed such that a live-in value (s) is in the same register ($S_E$) in the zero-iteration case as it would have been had the loop required one or more iterations so that the live-in value had become a live-out value.

3. A processor as claimed in claim 1 or 2, wherein said loop handling means are operable to cause an epilogue phase of the loop only to be carried out in the event that the loop requires zero iterations.

4. A processor as claimed in claim 3, wherein said epilogue phase comprises one or more epilogue iterations, each epilogue iteration serving to bring about one or more register renaming operations by said register renaming means.

5. A processor as claimed in claim 4, wherein the register renaming means (32) are operable to rename the registers each time a new iteration is started, and the total number of said register renaming operations brought about in said epilogue phase is one less than the number of software pipeline stages (p).

6. A processor as claimed in claim 4, wherein the register renaming means (32) are operable to rename the registers each time a value-producing instruction is issued, and the total number of said register renaming operations brought about in said epilogue phase is the product of the number of value-producing instructions issued per iteration (v) and one less than the number of software pipeline stages (p).

7. A processor as claimed in any one of claims 4 to 6, wherein the number of said epilogue iterations (EIC) is one less than the number of software pipeline stages (p) .

8. A processor as claimed in any one of claims 3 to 7, wherein the number of register renaming operations in the epilogue phase is specifiable independently of an iteration count of the loop itself.

9. A processor as claimed in any one of claims 4 to 8, wherein the number of epilogue iterations (EIC) is specifiable independently of an iteration count (IC) of the loop itself.

10. A processor as claimed in claim 9, wherein the number of epilogue iterations (EIC) is specified in an instruction ("loop") executable by the processor.

11. A processor as claimed in claim 9, wherein said number of epilogue iterations (EIC) is specified in a loop instruction (40) executed during startup of a software-pipelined loop.

**12.** A processor as claimed in claim 11, wherein the number of iterations of the loop (IC) is also specified independently in said loop instruction.

**13.** A processor as claimed in claim 11, wherein said loop instruction (40) has a field (40B) in which said number of epilogue iterations is specified.

**14.** A processor as claimed in claim 13, wherein said loop instruction (40) has a separate field (40A) in which the number of iterations of the loop (IC) is specified.

**15.** A processor as claimed in any one of claims 3 to 14, wherein said loop handling means (10, 50, 52) are operable, when initiating the loop, to receive an iteration count (IC) specifying the number of iterations in the loop and, if the specified number is zero, to cause only the epilogue phase to be carried out and, if the specified number is non-zero, to cause prologue, kernel and epilogue phases of the loop to be carried out.

**16.** A processor as claimed in any preceding claim, adapted for predicated execution of instructions, and further comprising predicate registers (P1-P5; P0-Pn-1) corresponding respectively to the different software pipeline stages of the loop, each predicate register being switchable between a first state (1), in which its corresponding software pipeline stage is enabled, and a second state (0) in which its corresponding software pipeline stage is disabled;
said loop handling means being operable to initialise the predicate registers in dependence upon the number of iterations in the loop.

**17.** A processor as claimed in claim 16, wherein said loop handling means are operable to initiate the predicate registers (P13-P25) in one way when the number of iterations in the loop is zero and in at least one other way when the number of iterations in the loop is not zero.

**18.** A processor as claimed in claim 16 or 17, wherein, when the number of iterations in the loop is zero, all predicate registers (P14-P25) corresponding to the stages of the loop are initialised in the second state (0), whereas when the number of iterations in the loop is non-zero, the predicate register corresponding to the first pipeline state (P14) is initialised in the first state (1) and each predicate register (P15-P25) corresponding to a subsequent stage is initialised in the second state.

**19.** A processor as claimed in claim 16, 17 or 18, further comprising:

shifting means operable to shift the state of the predicate register (P14) corresponding to the first pipeline stage into the predicate register (P15) corresponding to the second pipeline stage, and so on for the predicate registers (P16-P25) corresponding to each subsequent pipeline stage, and to set the state of the predicate register corresponding to the first pipeline stage in dependence upon a seed register (137) ;
said loop handling means being operable to initialise the seed register differently in dependence upon the number of iterations in the loop.

**20.** A processor as claimed in claim 19, wherein said loop handling means initialise the seed register (137) in the second state (0) when the number of iterations in the loop is zero or one, and initialise the seed register in the first state (1) when the number of iterations in the loop is two or more.

**21.** A compiling method for a processor, comprising specifying in an object program a register renaming to be carried out by the processor in the event that a software-pipelined loop has a zero iteration count.

**22.** A compiling method as claimed in claim 21, wherein the processor carries out an epilogue phase only of the loop in the zero-iteration count case, and the compiling method involves including in the object program information specifying a number of register renaming operations to be carried out in the epilogue phase.

**23.** A compiling method as claimed in claim 21, wherein the processor carries out an epilogue phase only of the loop in the zero-iteration count case, and the compiling method involves including in the object program information (eic) specifying a number of iterations to be carried out in the epilogue phase.

**24.** A compiling method as claimed in claim 22 or 23, wherein said information (eic) is specified in an instruction ("loop") included in the object program.

**25.** A compiling method as claimed in claim 24, wherein said instruction is a loop instruction (40) executed during startup of a software-pipelined loop.

**26.** A compiling method as claimed in claim 25, wherein the loop instruction also specifies independently a number of iterations (IC) in the loop.

**27.** An object program for execution by a processor, said object program including information (eic) specifying a number of iterations to be carried out in an epilogue phase of a software-pipelined loop.

**28.** An object program as claimed in claim 27, wherein the processor carries out the epilogue phase only of the loop in the event that the loop has a zero iteration count, and the object program includes information (eic) specifying a number of iterations to be carried out in the epilogue phase.

**29.** An object program as claimed in claim 28, wherein the information (eic) is specified in an instruction ("loop") included in the object program.

**30.** An object program as claimed in claim 29, wherein the instruction is a loop instruction (40) executed during startup of a software-pipelined loop.

**31.** An object program as claimed in claim 30, wherein the loop instruction also specifies independently an iteration count (IC) of the loop.

**32.** A computer program which, when run on a computer, causes the computer to carry out a compiling method for a processor, the computer program comprising a renaming information specifying portion for specifying in an object program a register renaming to be carried out by the processor in the event that a software-pipelined loop has a zero iteration count.

**33.** A program as claimed in any one of claims 27 to 32, carried by a carrier medium.

**34.** A program as claimed in claim 33, wherein the carrier medium is a recording medium.

**35.** A program as claimed in claim 33, wherein the carrier medium is a transmission medium.

**36.** Compiling apparatus for a processor, comprising means for specifying in an object program a register renaming to be carried out by the processor in the event that a software-pipelined loop has a zero iteration count.

**37.** A loop instruction, executable by a processor to start up a software-pipelined loop, including information (eic) specifying a number of iterations to be carried out in an epilogue phase of the loop.

**38.** A loop instruction as claimed in claim 37, further specifying independently an iteration count (IC) of the loop.

*Fig.1*

| Iteration 1 | Iteration 2 | Iteration 3 | Iteration 4 | Iteration 5 | Cycle |
|---|---|---|---|---|---|
| ld4 | | | | | X |
| | ld4 | | | | X+1 |
| add | | ld4 | | | X+2 |
| st4 | add | | ld4 | | X+3 |
| | st4 | add | | ld4 | X+4 |
| | | st4 | add | | X+5 |
| | | | st4 | add | X+6 |
| | | | | st4 | X+7 |

*Fig. 2*

| Iteration 1 | Iteration 2 | Iteration 3 | Iteration 4 | Iteration 5 | Description |
|---|---|---|---|---|---|
| ld4 | | | | | Prologue starts |
| | ld4 | | | | |
| add | | ld4 | | | |
| st4 | add | | ld4 | | Kernel starts |
| | st4 | add | | ld4 | |
| | | st4 | add | | Epilogue starts |
| | | | st4 | add | |
| | | | | st4 | |

*Fig. 3*

```
1:      int s = 0;
2:      for ( i = 0; i < N; i++ )
3:      {
4:              s = s + a[i];
5:              b[i] = s;
6:      }
7:      c = s;
```

## Fig.4

$$S_I - S_R = q$$

$$S_W - S_E = t$$

$$S_W - S_R = v$$

circumference = pv

## Fig.5

**Fig.7**

**Fig.6**

EP 1 296 226 A2

40A    40B    40C

31 30    26 25 22    20    16 15    5 4    0

| 0 | Ad | 1110 | 0 | eic | size | | P |

40

**Figure 8**

50

| IC |

31    27    16    11    0

| 0 | R | LCnt | EIC | LSize |

52

**Figure 9**

Fig.10

Fig.11

*Fig.12*

Figure 13

EP 1 296 226 A2